# EUROPÄISCHE PATENTSCHRIFT

(11) **EP 0 962 637 B1**
(45) Veröffentlichungstag und Bekanntmachung des Hinweises auf die Patenterteilung: **03.11.2004**
(21) Anmeldenummer: 99108408.8
(22) Anmeldetag: 29.04.1999
(51) Int. Cl.: F02D 11/10, F02D 41/22

(54) **Motorleistungsregelung für Kraftfahrzeuge mit einem Leistungssteuerorgan**
Engine power control for a motor vehicle equipped with a power control element
Commande de puissance de moteur à combustion pour véhicule avec organe de réglage de puissance

(30) Priorität: 05.06.1998 DE 19825283
(43) Veröffentlichungstag der Anmeldung: 08.12.1999
(73) Patentinhaber: Bayerische Motoren Werke Aktiengesellschaft, 80788 München (DE)
(72) Erfinder: Nickolai, Norbert, 83410 Laufen (DE)
(74) Vertreter: Wesel-Mair, Julia

(56) Entgegenhaltungen:
- DE-A- 3 804 012
- DE-A- 3 834 788
- DE-A- 3 844 286
- US-A- 5 339 782

## Beschreibung

Die Erfindung bezieht sich auf eine Motorleistungsregelung für Kraftfahrzeuge mit einem Leistungssteuerorgan nach dem Oberbegriff des Patentanspruchs 1.

Bei derartigen bekannten elektronischen Motorleistungsregelungen (auch E-Gas" genannt) betätigt im Gegensatz zu der bisher üblichen mechanischen Verstellung eines Leistungssteuerorgans, z. B. einer Drosselklappe, über Seilzug ein elektronisches Steuergerät vorzugsweise elektromotorisch das Leistungssteuerorgan. Das System ist daher in der Lage, das Leistungssteuerorgan, beispielsweise die Drosselklappe bei Otto-Motoren oder die Einspritzung bei Diesel-Motoren, in Abhängigkeit von verschiedenen Betriebsparametern zu steuern, um z. B. eine Motormomentreduzierung für die Antriebsschlupfregelung auszuführen. Dabei erfaßt üblicherweise ein Pedalwegsensor die Fahrpedalstellung und führt ein entsprechendes elektrisches Signal dem elektronischen Steuergerät zu. Das Steuergerät berechnet daraus das Ansteuersignal für beispielsweise den Drosselklappensteller und berücksichtigt dabei auch die Eingangssignale weiterer Systeme (z. B. von Antriebsschlupfregelungen und/oder von Motorregelungen). Eine ständige Überprüfung aller Komponenten durch das Steuergerät stellt die einwandfreie Funktion des Systems sicher. Die Sensoren und die Rechner des Steuergeräts sind vorzugsweise zweifach ausgeführt, um durch einen Vergleich der jeweiligen Signale eine zuverlässige Plausibilitätsüberprüfung zu ermöglichen. Zum technischen Hintergrund wird beispielsweise auf den Zeitungsartikel Elektronikkonzept beim BMW-12-Zylinder-Motor", AutomobilIndustrie Nr. 1/88, Seite 19 ff., hingewiesen.

Bei Ausfall eines der beiden Pfade kann die Plausibilitätsüberprüfung nicht mehr erfolgen. Zur Erhöhung der Verfügbarkeit wird trotzdem eine Weiterfahrt in Form eines Notfahrens erlaubt. Dabei wird die Motorleistung auf einen maximal zulässigen Motormomentenwert beschränkt und die Fahrzeugdynamik begrenzt. Bei erhöhter Leistungsanforderung des Fahrers während des Notfahrens, z. B. bei erneutem Gasgeben nach dem Loslassen des Fahrpedals bei einem Schaltvorgang, wird das Motormoment gesteuert über eine definierte Rampe schrittweise bis zum maximal zulässigen Motormoment unabhängig von dem sich daraus ergebenden Verlauf der Fahrzeuggeschwindigkeit bzw. der Beschleunigung freigegeben. Der sich ergebende Beschleunigungsverlauf aufgrund der fest vorgegebenen Motormomentenrampe ist fahrzeugparameter-, motorparameter- und gangabhängig. Die fest vorgegebene Rampe wird für einen bestimmten Betriebspunkt, insbesondere für den worst case, ausgelegt. Dies hat zur Folge, daß in allen anderen Betriebspunkten nicht die gewünschte Mindestdynamik zur Verfügung steht. Dadurch, daß die definierte Rampe nach dem Loslassen des Fahrpedals bzw. nach Gaswegnahme durch den Fahrer bei anschließender erhöhter Leistungsanforderung immer auf dem untersten Wert neu beginnt, ergeben sich bezogen auf die Beschleunigung für den Fahrer unbefriedigende Verzögerungszeiten nach jedem Lastwechsel.

Es ist Aufgabe der Erfindung, bei einer Motorleistungsregelung eingangs genannter Art während des Notfahrens eine verbesserte Fahrzeugdynamik zu schaffen.

Diese Aufgabe wird durch die Merkmale des Patentanspruchs 1 gelöst. Eine vorteilhafte Weiterbildung der Erfindung ist der Gegenstand des Patentanspruchs 2.

Der Erfindung liegt der Gedanke zugrunde, daß für den Fahrer das Gefühl der Fahrzeugdynamik unmittelbar mit dem Beschleunigungsverhalten des Fahrzeugs verbunden ist. Daher wird erfindungsgemäß das Notfahren an der tatsächlichen Fahrzeugbeschleunigung orientiert. Die Erfindung sieht eine Regelung des Leistungssteuerorgans in der Weise vor, daß bei erhöhter Leistungsanforderung ohne (spürbare) Verzögerung eine unmittelbare Beschleunigung eingeleitet wird und daß sich im Falle des Beibehaltens der erhöhten Leistungsanforderung ein vorgegebener vorzugsweise dynamisch wirkender Beschleunigungsverlauf bis zum Erreichen des maximal zulässigen Motormoments ergibt.

Aus Sicherheitsgründen wird bei Betätigung der Bremse unabhängig von der Leistungsanforderung die Beschleunigung abgebrochen und die Brennkraftmaschine in den Leerlaufbetrieb übergeführt.

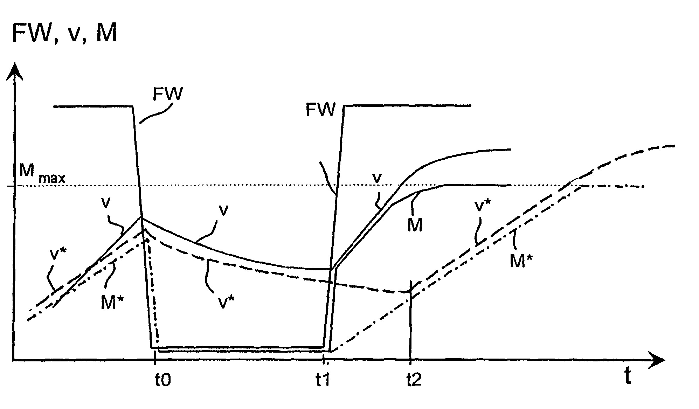

In der Zeichnung ist ein Ausführungsbeispiel der Erfindung dargestellt. Sie zeigt in vergleichender Weise die sich ergebenden Beschleunigungsverläufe nach dem Stand der Technik und nach der Erfindung.

In der einzigen Figur werden über der Zeit t in Abhängigkeit von der Leistungsanforderung FW während eines Notfahrens der vorgegebene Beschleunigungsverlauf in Form eines Geschwindigkeitsverlaufs v und der sich aus der Regelung des Leistungssteuerorgans entsprechend dem vorgegebenen Geschwindigkeitsverlauf v ergebende Motormomentenverlauf M dargestellt. Vor dem Zeitpunkt t0 liegt eine maximale Leistungsanforderung FW des Fahrers beispielsweise durch das vollständige Durchtreten des Fahrpedals vor. Zum Zeitpunkt t0 wird das Fahrpedal, z. B. aufgrund eines geplanten Gangwechsels, vollständig losgelassen, wodurch die Leistungsanforderung FW auf den Wert 0 sinkt, Zum Zeitpunkt t1, z. B. nach einem Gangwechsel, wird das Fahrpedal erneut vollständig durchgetreten, wodurch wiederum eine maximale Leistungsanforderung FW des Fahrers vorliegt. Da aufgrund eines vom hier nicht dargstellten Steuergerät erkannten Fehlers ein Notfahren mit reduzierter Leistung vorliegt, wird vom elektronischen Steuer gerät ein maximal zulässiges Motormoment Mₘₐₓ vorgegeben.

Erfindungsgemäß wird zum Zeitpunkt t1 das Leistungssteuerorgan derart geregelt, daß sich ein Motormomentenverlauf M ergibt, durch den zum einen eine unmittelbare Beschleunigung und zum anderen der vorgegebene Geschwindigkeitsverlauf v erreicht wird. Die Regelung des Leistungssteuerorgans ist zwar durch die Vorgabe des maximal zulässigen Motormoments Mₘₐₓ begrenzt, jedoch kann durch die unmittelbare und spürbare Beschleunigung ab dem Zeitpunkt t1 bis zum Erreichen des maximal zulässigen Motormoments Mₘₐₓ ein dynamisches Gefühl vermittelt werden.

Um die Wirkung der erfindungsgemäßen Motorleistungsregelung zu verdeutlichen, ist in der Figur zum Vergleich der gesteuerte Momentenverlauf M* (strichpunktierte Linie) und der sich daraus ergebende Beschleunigungsverlauf bzw. Geschwindigkeitsverlauf v* (gestrichelte Linie) nach dem Stand der Technik dargestellt. Zum Zeitpunkt t1 wird nach dem Stand der Technik bei erhöhter Leistungsanforderung FW das Motormoment M* mit definierter Rampe ohne Berücksichtigung des Beschleunigungsverlaufs bzw. des Geschwindigkeitsverlaufs v* vorgegeben. Die vorgegebene Rampe entspricht insbesondere zwischen den Zeitpunkten t1 und t2 nicht der erhöhten Leistungsanforderung, wodurch sich bis zum Zeitpunkt t2 keine (positive) Beschleunigung, sondern eine Abnahme der Fahrzeuggeschwindigkeit v* ergibt. Erst zum Zeitpunkt t2 steigt die Fahrzeuggeschwindigkeit v* zum einen verzögert und zum anderen mit einem gegenüber der erfindungsgemäßen Motorleistungsregelung kleineren Gradienten wieder an. Durch dieses undynamische Verhalten kann der Fahrer irritiert werden.

Bei der erfindungsgemäßen Motorleistungsregelung, insbesondere gemäß einem vorgegebenen Beschleunigungs- bzw. Geschwindigkeitsverlauf, ist das Beschleunigungsverhalten unabhängig vom Fahrertyp, der Motorisierung und dem eingelegten Gang. In jedem Betriebspunkt steht die notwendige Leistung zum Weiterfahren bereit. Besonders positiv wirkt sich dieses Verhalten bei Schaltvorgängen (Handschalter), Bergfahrten und Anhängerbetrieb aus. Herkömmliche Notfahrstrategien können hierauf nicht abgestimmt werden und stellen daher eine nur unzureichende Lösung dar.

## Patentansprüche

1. Motorleistungsregelung für Kraftfahrzeuge mit einem Leistungssteuerorgan, das entkoppelt von der die Leistungsanforderung des Fahrers wiedergebenden Betätigung des Fahrpedal in Abhängigkeit von verschiedenen Betriebsparametem mittels eines elektronischen Steuergeräts steuer bar ist, bei der im Fehlerfall ein Notfahren mit einer durch die Vorgabe eines maximal zulässigen Motormoments reduzierten Leistung ermöglicht wird, **dadurch gekennzeichnet, daß** bei erhöhter Leistungsanforderung (FW) des Fahrers während des Notfahrens die Leistung (M) mittels des Leistungssteuerorgans in der Weise geregelt wird, daß zum Zeitpunkt (t1) der Erhöhung der Leistungsanforderung (FW) eine unmittelbare Beschleunigung eingeleitet wird und daß sich im Falle des Beibehaltens der erhöhten Leistungsanforderung ein vorgegebener Beschleunigungsverlauf bis zum Erreichen des maximal zulässigen Motormoments (Mₘₐₓ) ergibt.

2. Motorleistungsregelung nach Patentanspruch 1, **dadurch gekennzeichnet, daß** daß bei Betätigung der Bremse die Beschleunigung abgebrochen wird und das Leistungssteuerorgan in den Leerlaufbetrieb der Brennkraftmaschine übergeführt wird.

## Claims

1. An engine power control system for motor vehicles equipped with a power control means which is controllable via an electronic control unit in dependence on various operating parameters, independently of actuation of the accelerator pedal in accordance with the power required by the driver, wherein in the event of a fault emergency driving is possible at power reduced by presetting a maximum permissible engine torque, **characterised in that** when the power required (FW) by the driver is high during emergency driving, the power (M) is adjusted by the power control means so that at the time (t1) when the power requirement (FW) is increased, acceleration begins immediately, and if the increased power requirement is maintained the result is a preset acceleration curve until the maximum permissible engine torque (Mₘₐₓ) is reached.

2. An engine power control system according to claim 1, **characterised in that** when the brake is actuated the acceleration is stopped and the power control means is changed over to engine idling operation.

## Revendications

1. Commande de puissance du moteur à combustion d'un véhicule équipé d'un organe de réglage de puissance qui peut être commandé par un appareil de commande électronique en fonction de différents paramètres de fonctionnement, en étant découplé de la demande de puissance exprimée par le conducteur actionnant la pédale d'accélérateur, avec possibilité, en cas de défaillance, d'une conduite de secours à une puissance réduite, prédéfinie par un couple maximal admissible du moteur,
**caractérisée en ce que**
si, pendant la conduite de secours, le conducteur exprime la demande d'une puissance plus élevée (FW), la puissance (M) est réglée par l'organe de réglage de puissance, de manière qu'à l'instant (tl) où a lieu la demande d'augmentation de puissance (FW) l'accélération directe est induite et que, dans le cas où cette demande de puissance plus élevée est maintenue, une évolution prédéfinie de l'accélération est donnée jusqu'à obtention du couple maximal du moteur (Mₘₐₓ).

2. Commande de puissance de moteur selon la revendication 1,
**caractérisée en ce que**
quand les freins sont actionnés, l'accélération est interrompue, et l'organe de réglage de puissance est amené au fonctionnement de ralenti du moteur.
